# EUROPEAN PATENT APPLICATION

(11) **EP 4 825 578 A1**
(43) Date of publication of application: **21.10.2026**
(21) Application number: 24904356.3
(22) Date of filing: 11.12.2024
(51) Int. Cl.: B32B 15/08, B32B 38/00, B32B 7/12, B32B 15/04, B32B 15/082, B32B 15/18, B32B 27/08, B32B 27/30, B32B 37/12

(54) **VIBRATION-DAMPING STEEL SHEET AND MANUFACTURING METHOD THEREFOR**

(30) Priority: 15.12.2023 KR 20230183811
(71) Applicant: POSCO Co., Ltd, Gyeongsangbuk-do 37859 (KR)
(72) Inventor: KIM, Jin-Tae, Gwangyang-si, Jeollanam-do 57807 (KR); LEE, Jung-Hwan, Gwangyang-si, Jeollanam-do 57807 (KR); OH, Jong-Gi, Gwangyang-si, Jeollanam-do 57807 (KR); MIN, Kwang-Tai, Gwangyang-si, Jeollanam-do 57807 (KR); PAIK, Doo-Jin, Gwangyang-si, Jeollanam-do 57807 (KR)
(74) Representative: Meissner Bolte Partnerschaft mbB
(86) International application number: PCT/KR2024/096651
(87) International publication number: WO 2025/127791

(57) **Abstract**

The present invention relates to a vibration-damping steel sheet having excellent vibration-damping performance even at room temperature and a method for manufacturing a vibration-damping steel sheet having improved productivity.

## Description

### Technical Field

The present disclosure relates to a vibration-damping steel sheet and a method for manufacturing the same.

### Background Art

A vibration-damping steel sheet may be used in a wide variety of fields in which noise is to be reduced, such as drums or base steel sheets of home appliances used in environments in which high levels of noise are generated, such as washing machines and dryers.

A vibration-damping steel sheet may be manufactured by bonding two steel sheets using a thermoplastic resin. In general, as the thermoplastic resin, a general plastic resin such as a solid polyethylene, polypropylene, or polyamide resin, or a hot-melt resin such as ethylene vinyl acetate (EVA), is used.

A thermoplastic resin is easily molded because it undergoes plastic deformation when heated, but hardens when cooled. For this reason, there has been a problem in that it is difficult for a conventional vibration-damping steel sheet to absorb vibrations generated under room-temperature conditions.

Meanwhile, in manufacturing a conventional vibration-damping steel sheet, a heat-fusion process in which fusion bonding is performed by applying high-temperature heat to a thermoplastic resin is necessarily involved. In this case, a long period of time is required until the thermoplastic resin is melted, and after compression of the vibration-damping steel sheet, the vibration-damping steel sheet should be cooled again to room temperature, and thus there has been a problem in that a long period of time is required until commercialization.

As described above, there is a need for research to improve the vibration-damping performance of vibration-damping performance and productivity.

(Patent Document 1) Chinese Utility Model Publication No. 211689981

### Summary of Invention

### Technical Problem

An aspect of the present disclosure relates to a vibration-damping steel sheet having improved vibration-damping performance under room-temperature conditions.

Another aspect of the present disclosure relates to a method for manufacturing a vibration-damping steel sheet with improved productivity.

The objects of the present disclosure are not limited to the above description. Those skilled in the art to which the present disclosure pertains will have no difficulty in understanding additional objects of the present disclosure from the overall content of the present specification. Solution to Problem

According to exemplary embodiments of the present disclosure, a vibration-damping steel sheet is provided. The vibration-damping steel sheet includes a plurality of steel sheets; and a damping layer having a thickness of 10 to 250 µm and interposed between the steel sheets, wherein the damping layer is formed by drying a damping-forming solution containing a first resin having a glass transition temperature of -80 to -20°C and a second resin having a glass transition temperature of 5 to 100°C.

The first resin may be an alkyl acrylate-based resin.

The first resin may be one or two or more selected from 2-ethylhexyl acrylate, butyl acrylate, and ethyl acrylate.

The damping-forming solution may contain, by wt%, 75 to 90% of the first resin and 10 to 25% of the second resin.

The second resin may be one or more of methyl acrylate, methyl methacrylate, and polymers thereof.

The damping-forming solution may contain, based on 100 parts by weight of a total of the first resin and the second resin, 5 to 10 parts by weight of an adhesion promoter, 0.1 to 2 parts by weight of a curing agent, and 10 to 20 parts by weight of a tackifier.

The damping-forming solution may contain 90 to 150 parts by weight of an organic solvent based on 100 parts by weight of a total of the first resin, the second resin, the adhesion promoter, the curing agent, and the tackifier.

A weight average molecular weight of the damping layer may be 700,000 to 1,100,000.

A loss factor of the vibration-damping steel sheet may be 0.01 or more.

According to other exemplary embodiments of the present disclosure, a method for manufacturing a vibration-damping steel sheet is provided. The method for manufacturing a vibration-damping steel sheet includes providing a damping layer on a surface of a first steel sheet using a damping-forming solution; providing a second steel sheet on a surface of the damping layer; and pressing the first steel sheet or the second steel sheet, wherein the pressing is performed under room-temperature conditions.

The providing of the damping layer may include applying the damping-forming solution onto release paper; drying the damping-forming solution at a temperature of 110 to 150°C to obtain a damping layer; providing the damping layer on the surface of the first steel sheet; and removing the release paper.

### Advantageous Effects of Invention

The steel sheet according to exemplary embodiments includes a polymeric pressure-sensitive adhesive having adhesive strength under room-temperature conditions, and thus may exhibit excellent vibration-damping performance even under room-temperature conditions.

In the method for manufacturing a vibration-damping steel sheet according to other embodiments, the vibration-damping steel sheet may be bonded at room temperature, and thus a conventional heat-fusion process may be omitted. Accordingly, the manufacturing process of the vibration-damping steel sheet may be simplified, and manufacturing costs may be reduced.

Various beneficial advantages and effects of the present disclosure are not limited to those described above, and may be more readily understood in the course of describing specific embodiments of the present disclosure.

### Brief Description of Drawings

FIG. 1 is a schematic diagram for describing a vibration-damping steel sheet according to an embodiment in the present disclosure.
FIG. 2 is a diagram showing a modal evaluation method for measuring a loss factor.
FIG. 3 is a diagram showing specimen dimensions for a T-peel test method.

### Best Mode for Invention

Hereinafter, the present disclosure will be described in detail. The terms used in the present disclosure are for explaining the present disclosure and are not intended to limit the present disclosure. In addition, singular forms used in the present specification include plural forms, unless the context clearly indicates otherwise.

The term "comprising" used in the specification specifies a configuration and does not exclude the presence or addition of other configurations.

Unless otherwise defined, all terms including technical terms and scientific terms used in the present specification have the same meanings as those commonly understood by those skilled in the art to which the present disclosure pertains. Terms defined in dictionaries are to be interpreted as having meanings consistent with the relevant technical literature and the disclosure herein.

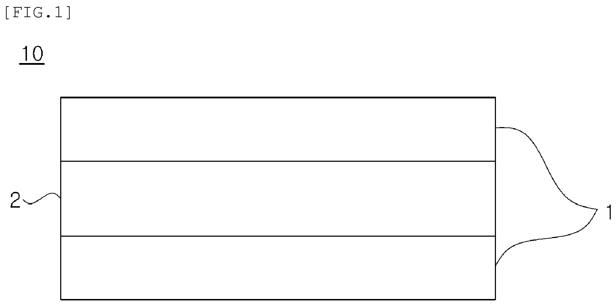

FIG. 1 is a diagram for describing a vibration-damping steel sheet 10 according to exemplary embodiments.

According to exemplary embodiments, the vibration-damping steel sheet 10 includes a plurality of steel sheets 1 and a damping layer 2 interposed between the steel sheets.

The plurality of steel sheets 1 may be two or more steel sheets. The plurality of steel sheets 1 may be steel sheets of the same type or different types.

Each of the plurality of steel sheets 1 may be one of a cold-rolled steel sheet, a hot-rolled steel sheet, a galvanized steel sheet, a galvannealed steel sheet, a stainless steel sheet, and an aluminum sheet.

The damping layer 2 is interposed between each of the plurality of steel sheets 1.

According to exemplary embodiments, the damping layer 2 may have a thickness of 10 µm to 250 µm. More specifically, the damping layer 2 may have a thickness of 10 µm to 200 µm. As a non-limiting example, the damping layer 2 may have a thickness of 60 µm to 200 µm.

When the thickness of the damping layer 2 is less than 10 µm, adhesive strength between the damping layer 2 and the steel sheet may be insufficient, and thus the vibration-damping steel sheet 10 may be easily separated. In addition, the two steel sheets may be brought into excessively close contact with each other, and the vibration-damping performance of the vibration-damping steel sheet 10 may be poor. When the thickness of the damping layer 2 exceeds 250 µm, manufacturing costs of the vibration-damping steel sheet may excessively increase.

The damping layer 2 may be provided by drying a damping-forming solution containing a polymer resin. A viscosity of the damping-forming solution may be 1,000 to 7,000 cps. Accordingly, the damping layer may have adhesive performance at room temperature. In the present disclosure, the viscosity of the damping-forming solution refers to a viscosity measured at room temperature (about 25°C).

When the viscosity of the damping-forming solution is less than 1,000 cps, the vibration-damping steel sheet may not be sufficiently bonded. In this case, an additional process for increasing the thickness of the damping layer is required, and thus process costs may increase. However, when the viscosity of the damping solution exceeds 7,000 cps, the damping layer may become excessively thick, and handling during the manufacturing process may be difficult.

According to exemplary embodiments, the damping layer 2 may be formed by drying a damping-forming solution containing a polymer resin.

A weight average molecular weight of the damping-forming solution may be 700,000 to 1,100,000. When the weight average molecular weight is less than 700,000, cohesive properties of the damping-forming solution may be poor, and as a result, durability of the damping layer may be poor. In addition, adhesion of the damping layer may be insufficient, and thus the damping layer may be easily peeled from the steel sheet. When the weight average molecular weight exceeds 1,100,000, the damping-forming solution may undergo gelation or its viscosity may increase, making coating difficult.

A weight average molecular weight is a molecular weight calculated with emphasis on the weight of a polymer. The weight average molecular weight may be calculated by the following Relational Expression 1. [Relational Expression 1] $Mw = Σ {Mi}^{2} * Ni / Σ MiNi$
Mw: weight average molecular weight
Mi: molecular weight
Ni: number of moles having the corresponding molecular weight

The damping-forming solution may contain a first resin, a second resin, an adhesion promoter, a curing agent, a tackifier, and an organic solvent.

The material composition of the damping-forming solution, excluding the organic solvent, may be substantially the same as the material composition of the damping layer. This is because the organic solvent volatilizes while the damping layer is formed during the manufacturing process. However, a trace amount of the organic solvent may remain and may be contained in the damping layer.

The first resin may be a main resin of the damping layer.

The first resin may be contained in an amount of 75 to 90 wt% based on the total weight of the damping-forming solution. When the content of the first resin is less than 75%, the initial adhesive strength of the damping layer may be reduced. In addition, the viscous flow region of the damping layer may become narrow, and thus the damping layer may not have sufficient viscosity at room temperature. When the content of the first resin exceeds 90%, cohesive strength of the damping-forming solution may be insufficient, and adhesive strength and adhesion of the damping layer may be insufficient.

A glass transition temperature of the first resin may be -80 to -20°C. More specifically, the glass transition temperature of the first resin may be -80 to -40°C. When the glass transition temperature of the first resin is lower than -80°C, cohesive strength of the damping-forming solution may be insufficient. In addition, when the glass transition temperature of the first resin exceeds -20°C, the initial adhesive strength of the damping layer may be insufficient. Furthermore, the vibration-damping performance of the vibration-damping steel sheet may be poor.

When the first resin having a glass transition temperature within a predetermined range is contained in an appropriate amount, cohesive strength of the damping-forming solution may be improved, and adhesive strength of the damping layer may be further improved.

The first resin may contain an alkyl acrylate-based resin. An alkyl acrylic-based resin has excellent weather resistance and oil resistance, and also has excellent tackiness due to its polymerizability, which allows it to be easily synthesized as a copolymer. As a non-limiting example, the first resin may contain one or two or more selected from 2-ethylhexyl acrylate, butyl acrylate, and ethyl acrylate.

The second resin may be contained in an amount of 10 to 25 wt% based on the total weight of the damping-forming solution. When the content of the second resin is less than 10%, cohesive strength of the damping-forming solution may be insufficient at room temperature. When the content of the second resin exceeds 25%, the initial adhesive strength of the damping layer may be reduced.

A glass transition temperature of the second resin may be 5 to 100°C. When the glass transition temperature of the second resin is lower than 5°C, cohesive properties of the damping-forming solution may be poor at room temperature. In this case, adhesive strength of the damping layer may be reduced at room temperature. When the glass transition temperature of the second resin exceeds 100°C, the hardness of the damping layer may excessively increase at room temperature. In this case, the vibration-damping properties of the damping layer may be poor.

When the content of the second resin having a glass transition temperature within a predetermined range is controlled within the above-described range, adhesive strength and viscosity of the damping layer may be improved at room temperature. As a result, the vibration-damping performance of the vibration-damping steel sheet may be improved at room temperature.

As a non-limiting example, the second resin may be one of methyl acrylate, methyl methacrylate, and polymers thereof. The methyl acrylate-based resin may contribute to improving the cohesiveness of the first resin, and thus may improve adhesion of the damping-forming solution.

The adhesion promoter may be contained in an amount of 5 to 10 parts by weight based on 100 parts by weight of a total of the first resin and the second resin. When the content of the adhesion promoter is less than 5 parts by weight, adhesive strength between the damping layer and the steel sheets may be insufficient. When the content of the adhesion promoter exceeds 10 parts by weight, it may be difficult to control the viscosity of the damping-forming solution. In this case, processability of the damping-forming solution may be poor.

The adhesion promoter may contain a resin containing a carboxyl group or a hydroxyl group. As a non-limiting example, the adhesion promoter may contain one or two or more selected from acrylic acid, methacrylic acid, hydroxyethyl methacrylate, and hydroxymethyl methacrylate.

The curing agent may be contained in an amount of 0.1 to 2 parts by weight based on 100 parts by weight of a total of the first resin and the second resin. The curing agent may enhance cohesive strength while maintaining the viscosity of the damping-forming solution. Therefore, the curing agent may be contained in an amount of 0.1 parts by weight or more. However, when the content of the curing agent exceeds 2 parts by weight, cohesive strength of the damping-forming solution may excessively increase, and thus the damping-forming solution may not be uniformly coated.

The curing agent may contain one of a metal chelate-based curing agent and an epoxy-based curing agent. Non-limiting examples of the metal chelate-based curing agent include aluminum acetylacetonate. Non-limiting examples of the epoxy-based curing agent include N,N,N,N-tetraglycidyl-m-xylenediamine.

The tackifier may be contained in an amount of 10 to 20 parts by weight based on 100 parts by weight of a total of the first resin and the second resin. With the addition of the tackifier, adhesive strength of the damping layer may be further improved. For this purpose, the tackifier may be contained in an amount of 10 parts by weight or more. However, when the content of the tackifier exceeds 20 parts by weight, cohesive strength of the damping-forming solution may excessively increase, and coating of the damping-forming solution may be difficult. In addition, manufacturing costs of the vibration-damping steel sheet may increase.

As a non-limiting example, the tackifier may contain one or two or more of benzoic acrylate and cyclohexyl acrylate.

The organic solvent may be contained in an amount of 90 to 150 parts by weight based on 100 parts by weight of a total of the first resin, the second resin, the adhesion promoter, the curing agent, and the tackifier. More specifically, the organic solvent may be contained in a weight substantially the same as the total weight of all resin species.

When the content of the organic solvent is 90 parts by weight, workability of the damping-forming solution may be poor. When the organic solvent exceeds 150 parts by weight, it may be difficult to control the thickness of the damping layer.

As a non-limiting example, the organic solvent may be one of toluene, acetone, isopropyl alcohol, n-hexane, and mixtures thereof.

The vibration-damping steel sheet including the above-described steel sheets and the damping layer formed using the damping-forming solution may have high vibration-damping properties even at room temperature.

A loss factor of the vibration-damping steel sheet according to exemplary embodiments may be 0.01 or more. Impact noise generated when measuring impact noise by a spring hammer striking test of the vibration-damping steel sheet may be less than 73 dB.

Hereinafter, a method for manufacturing a vibration-damping steel sheet will be described. According to exemplary embodiments, the method may include providing a second steel sheet on a surface of the damping layer, and pressing the first steel sheet or the second steel sheet.

According to exemplary embodiments, a damping layer may be provided on a surface of the first steel sheet using a damping-forming solution.

As an example, the damping-forming solution may be coated on the surface of the first steel sheet and then dried to form the damping layer.

As another example, the damping-forming solution may be applied to release paper and then dried to form the damping layer. In this case, the method may further include providing the damping layer formed on the release paper on the surface of the first steel sheet, and then removing the release paper.

The damping-forming solution may be dried at a temperature of 110 to 150°C. As a result, the organic solvent of the damping-forming solution may volatilize, and the resin species may be cured by a crosslinking reaction. As a result, a damping layer having excellent adhesive strength and viscosity even at room temperature may be obtained.

According to exemplary embodiments, a second steel sheet may be provided on a surface of the damping layer. The second steel sheet may be substantially the same type of steel sheet as the first steel sheet. The second steel sheet may be a different type of steel sheet from the first steel sheet.

According to exemplary embodiments, the first steel sheet or the second steel sheet may be pressed. As a result, the first steel sheet and the second steel sheet may be fixed to each other by the damping layer. That is, the vibration-damping steel sheet according to exemplary embodiments may be obtained through this step.

As a non-limiting example, the pressing of the first steel sheet or the second steel sheet may be performed using a press. The pressure of the press may be about 10 MPa to about 30 MPa. When the pressure of the press is less than 10 MPa, the damping layer may not be sufficiently bonded to the first steel sheet and the second steel sheet. In this case, durability of the vibration-damping steel sheet may be poor. When the pressure of the press exceeds 30 MPa, the damping layer may be damaged.

According to exemplary embodiments, the pressing of the first steel sheet and the second steel sheet is performed under room-temperature conditions. As such, high-temperature heat treatment for bonding the first steel sheet and the second steel sheet may be omitted. As a result, a cooling process such as air cooling after high-temperature heat treatment may also be omitted. Therefore, man-hours for the vibration-damping steel sheet manufacturing process may be reduced, thereby reducing process costs and preventing equipment load caused by high-temperature heat treatment.

By repeating the above-described steps, an additional damping layer and steel sheet may be stacked on the second steel sheet.

Hereinafter, the present disclosure will be described more specifically with reference to Examples. However, it should be noted that the following Examples are only for illustrating the present disclosure in more detail and are not intended to limit the scope of the present disclosure. This is because the scope of the present disclosure is determined by the matters recited in the claims and matters reasonably inferred therefrom.

### Mode for Invention

### Example 1

A damping-forming solution was prepared, the damping-forming solution containing, as a first resin, 80 wt% of 2-ethylhexyl acrylate, as a second resin, 20 wt% of methyl acrylate, as an adhesion promoter, 4 parts by weight of acrylic acid, and as a curing agent, 0.3 parts by weight of N,N,N,N-tetraglycidyl-m-xylenediamine. The glass transition temperature of 2-ethylhexyl acrylate was about - 70°C. The glass transition temperature of methyl acrylate was about 8°C.

The damping-forming solution was coated on release paper and then dried at a temperature of about 110°C to provide a damping layer having a thickness of 10 µm on the release paper. The viscosity of the damping layer at room temperature (about 25°C) was about 6,500 cps.

The damping layer provided on the release paper was attached to a galvanized steel sheet having a size of 200 X 300 mm. The release paper was removed, and another galvanized steel sheet having the same size was attached to the exposed surface of the damping layer. The galvanized steel sheets were pressed at room temperature under a pressure of about 20 MPa for about 10 seconds, thereby manufacturing a vibration-damping steel sheet.

### Examples 2 to 8

Vibration-damping steel sheets were manufactured in the same manner as in Example 1, except that the thickness of the damping layer was changed as shown in Table 1.

### Comparative Example 1

A galvanized steel sheet having a size of 200 X 300 mm was prepared.

### Comparative Example 2

A solution containing a urethane-based resin (Aekyung Specialty & Paint Co., Ltd., PS-SP) was prepared as a damping-forming solution. The glass transition temperature of the urethane-based resin was 80 to 100°C.

The damping-forming solution was coated on a galvanized steel sheet having a size of 200 X 300 mm and then dried at about 150°C to provide a damping layer having a thickness of about 30 µm on the galvanized steel sheet. The viscosity of the damping layer at room temperature (about 25°C) was about 5 cps.

After a galvanized steel sheet was attached onto the damping layer, hot pressing was performed to obtain a vibration-damping steel sheet according to Comparative Example 2. The hot pressing was performed by pressing at a temperature of about 200°C under a pressure of 20 MPa for 5 minutes.

### Comparative Example 3

As a damping layer, a solid film having a thickness of about 100 µm and containing an ethylene vinyl acetate (EVA)-based resin was prepared.

The solid film was disposed between two galvanized steel sheets, and then the solid film and the galvanized steel sheets were hot-pressed to manufacture a vibration-damping steel sheet. The hot pressing was performed by pressing at about 140°C under a pressure of 20 MPa for 5 minutes.

The vibration-damping performance and impact noise of the vibration-damping steel sheets according to the Examples and Comparative Examples prepared as described above were evaluated. In addition, adhesive strength of the vibration-damping steel sheets prepared in the Examples was evaluated. The evaluation results are shown in Tables 1 and 2.

The vibration-damping performance may be measured based on the ability to convert vibration energy into thermal energy when vibration is applied to a material, and a loss factor (η) is used. The loss factor (η) is defined by the following Relational Expression 2, where E is the total vibration energy of a material during vibration, and ΔE is energy dissipated by being converted into thermal energy during one cycle of vibration. [Relational Expression 2] $η = ΔE / 2 πE \left(η\leq 1\right)$

Here, η represents a vibration loss factor.

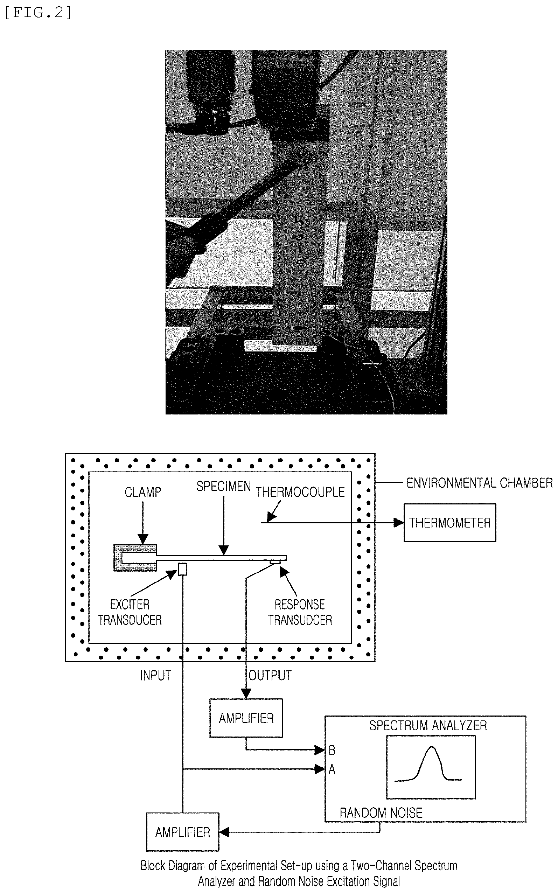

The loss factor and vibration response values were measured using the modal evaluation method of FIG. 2. The modal evaluation method is a type of vibration test and is an impact test method using a hammer on a test piece. After impact was applied to the test piece with a hammer, the loss factor was measured using vibration characteristics generated from the test piece, and whether vibration and noise were reduced was measured. At this time, loss factor values in a low-frequency region of 1 KHz or less and a highfrequency region of 1 KHz or more were measured, and an average thereof is shown in Tables 1 and 2. It may be evaluated that the greater the loss factor value, the better the vibration-damping performance.

Impact noise was evaluated using an impact noise measurement method based on a spring hammer striking test.

A test piece was fixed to a test piece holder, a hammer was dropped onto the test piece, and noise generated from the test piece was collected by a microphone to measure the magnitude of the noise.

Adhesive strength was evaluated using a T-peel evaluation method.

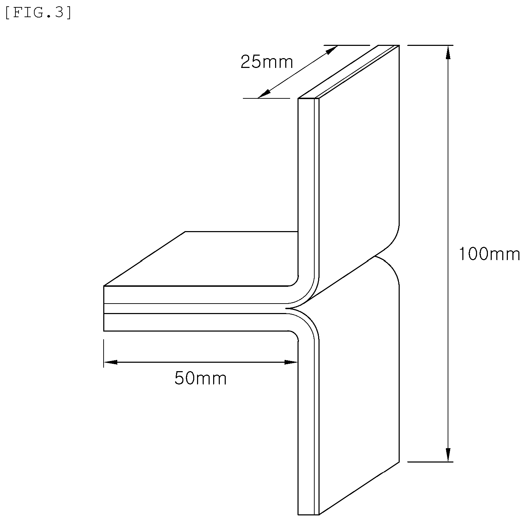

FIG. 3 is a diagram for describing the T-peel evaluation method.

A test piece was prepared as shown in FIG. 3. The size of the test piece was 100 * 25 mm. Thereafter, when the test piece was peeled using a tensile tester at a peel rate of 50 mm/min, the max.load value was evaluated as the adhesive strength of the damping layer. An adhesive strength of 1 kgf/25 mm or more may be determined to be an ordinary level, and an adhesive strength of 3 kgf/25 mm or more may be determined to be excellent.

**[Table 1]**

| Classification | Example 1 | Example 2 | Example 3 | Example 4 | Example 5 | Example 6 | Example 7 | Example 8 |
|---|---|---|---|---|---|---|---|---|
| Damping layer thickness (µm) | 10 | 20 | 30 | 60 | 100 | 150 | 200 | 250 |
| Loss factor | 0.010 | 0.057 | 0.083 | 0.163 | 0.162 | 0.167 | 0.162 | 0.1 |
| Impact noise (dB) | 72 | 71 | 71 | 69 | 70 | 68 | 69 | 69 |
| Adhesive strength (kgf/25 mm) | 1.0 | 1.7 | 3.0 | 4.5 | 4.8 | 4.6 | 4.6 | 4.5 |

**[Table 2]**

| Classification | Comparative Example 1 | Comparative Example 2 | Comparative Example 3 |
|---|---|---|---|
| Bonding method | GI material alone | Hot-melt coating (urethane) | Hot-melt film (EVA) |
| Loss factor | 0.002 | 0.006 | 0.005 |
| Impact noise (dB) | 86 | 73 | 71 |

Referring to Tables 1 and 2, the vibration-damping steel sheets according to exemplary embodiments exhibited excellent vibration-damping performance and generated less impact noise. In addition, since the vibration-damping steel sheets were not completely hardened even at room temperature and had adhesive strength of an ordinary level or higher, the vibration-damping steel sheets could be obtained by only a simple pressing process.

In Comparative Example 1, no damping layer was included, and thus the impact noise level (dB) was measured to be higher than that of the vibration-damping steel sheets according to exemplary embodiments of the present disclosure. In addition, in Comparative Example 1, the loss factor was also measured to be low, confirming that vibration-damping performance was inferior.

As described above, by comparing Comparative Example 1 with the vibration-damping steel sheets according to exemplary embodiments of the present disclosure, it was confirmed that vibration-damping performance and impact performance may be improved by including a damping layer between at least two steel sheets.

In Comparative Example 2, the damping layer was formed using a solution containing only one type of resin (urethane-based resin). As a result, adhesive strength and tackiness at room temperature were inferior, and thus it was necessary to perform hot pressing in a high-temperature environment to provide the vibration-damping steel sheet. As a result, in Comparative Example 2, impact noise of the vibration-damping steel sheet was reduced due to the inclusion of the damping layer, but the vibration-damping performance remained only about 3/5 to 3/100 of the vibration-damping performance of the vibration-damping steel sheets according to exemplary embodiments of the present disclosure.

Comparative Example 3 is an example using a solid film, not a liquid. As a result, as in Comparative Example 2, it was necessary to perform hot pressing in a high-temperature environment to provide the vibration-damping steel sheet. As a result, the vibration-damping performance represented by the loss factor of Comparative Example 3 was inferior.

Although the present disclosure has been described above with reference to the Examples, those skilled in the art will understand that the present disclosure may be variously modified and changed without departing from the spirit and scope of the present disclosure described in the following claims.

### (Description of Reference Characters)

- 10:: Vibration-damping steel sheet
- 1:: Steel sheet
- 2:: Damping layer

## Claims

1. A vibration-damping steel sheet comprising:
a plurality of steel sheets; and
a damping layer having a thickness of 10 to 250 µm and interposed between the steel sheets,
wherein the damping layer is formed by drying a damping-forming solution containing a first resin having a glass transition temperature of -80 to -20°C and a second resin having a glass transition temperature of 5 to 100°C.

2. The vibration-damping steel sheet of claim 1, wherein the first resin is an alkyl acrylate-based resin.

3. The vibration-damping steel sheet of claim 1, wherein the first resin is one or two or more selected from 2-ethylhexyl acrylate, butyl acrylate, and ethyl acrylate.

4. The vibration-damping steel sheet of claim 1, wherein the damping-forming solution contains, by wt%, 75 to 90% of the first resin and 10 to 25% of the second resin.

5. The vibration-damping steel sheet of claim 1, wherein the second resin is one or more of methyl acrylate, methyl methacrylate, and polymers thereof.

6. The vibration-damping steel sheet of claim 1, wherein the damping-forming solution contains, based on 100 parts by weight of a total of the first resin and the second resin, 5 to 10 parts by weight of an adhesion promoter, 0.1 to 2 parts by weight of a curing agent, and 10 to 20 parts by weight of a tackifier.

7. The vibration-damping steel sheet of claim 6, wherein the damping-forming solution contains 90 to 150 parts by weight of an organic solvent based on 100 parts by weight of a total of the first resin, the second resin, the adhesion promoter, the curing agent, and the tackifier.

8. The vibration-damping steel sheet of claim 1, wherein a weight average molecular weight of the damping layer is 700,000 to 1,100,000.

9. The vibration-damping steel sheet of claim 1, wherein a loss factor of the vibration-damping steel sheet is 0.01 or more.

10. A method for manufacturing a vibration-damping steel sheet, the method comprising:
providing a damping layer on a surface of a first steel sheet using a damping-forming solution;
providing a second steel sheet on a surface of the damping layer; and
pressing the first steel sheet or the second steel sheet,
wherein the pressing is performed under room-temperature conditions.

11. The method of claim 10, wherein the providing of the damping layer includes:
applying the damping-forming solution onto release paper;
drying the damping-forming solution at a temperature of 110 to 150°C to obtain a damping layer;
providing the damping layer on the surface of the first steel sheet; and
removing the release paper.
